# EUROPÄISCHE PATENTSCHRIFT

(11) **EP 0 645 548 B1**
(45) Veröffentlichungstag und Bekanntmachung des Hinweises auf die Patenterteilung: **05.03.1997**
(21) Anmeldenummer: 94113874.5
(22) Anmeldetag: 05.09.1994
(51) Int. Cl.: F16D 1/10

(54) **Kupplungsvorrichtung**
Coupling device
Dispositif d'accouplement

(30) Priorität: 24.09.1993 DE 4332485
(43) Veröffentlichungstag der Anmeldung: 29.03.1995
(73) Patentinhaber: ETABLISSEMENT SUPERVIS, FL-9490 Vaduz (LI)
(72) Erfinder: Nau, Markus, Dipl.-Ing., CH-7206 Igis (CH)
(74) Vertreter: Hefel, Herbert, Dipl.-Ing.

(56) Entgegenhaltungen:
- EP-A- 0 092 669
- DE-A- 2 735 002
- DE-C- 3 408 857

## Beschreibung

Die Erfindung bezieht sich auf eine Vorrichtung zum Verbinden eines kerbverzahnten, der Übertragung von Drehmomenten dienenden Wellenzapfens mit einem eine innen kerbverzahnte Hülse tragenden Bauteil gemäß dem Oberbegriff von Anspruch 1. Eine solche Vorrichtung ist z.B. aus Dokument EP-A-92 669 bekannt.

Aufgabe der Erfindung ist es, eine Verbindung für die erwähnten Bauteile zu schaffen, die ohne Hilfsmittel und ohne Werkzeuge hergestellt und auch wieder gelöst werden kann, und mit welcher Drehmomente spielfrei übertragen werden können. Forderungen dieser Art werden an Lenksäulen von Kraftfahrzeugen gestellt, doch ist die Erfindung auf dieses spezielle Anwendungsgebiet nicht beschränkt.

Zur Lösung dieser komplexen Aufgabe sieht die Erfindung jene Maßnahmen vor, die Inhalt und Gegenstand des kennzeichnenden Teiles des Patentanspruches 1 sind. Zweckmäßige Ausgestaltungen der Erfindung sind in den Unteransprüchen festgehalten.

Die Erfindung wird nachstehend anhand eines Ausführungsbeispieles näher beschrieben. Es zeigen:
Fig. 1 nach Art einer Explosionszeichnung die vorerst getrennten, zu verbindenden Bauteile, wobei der eine Bauteil im Längsschnitt dargestellt ist;
Fig. 2 einen Montageschritt während der Herstellung der Verbindung;
Fig. 3 die fertiggestellte Verbindung;
Fig. 4 die Hülse im Längsschnitt.

Ein Wellenzapfen 1, der beispielsweise eine Lenkwelle einer Kraftfahrzeuglenkung bildet, besitzt an seinem einen Ende eine Kerbverzahnung 2 und nahe seiner Stirnseite 3 eine umlaufende Nut 4 mit einem kreisbogenförmigen Querschnitt.

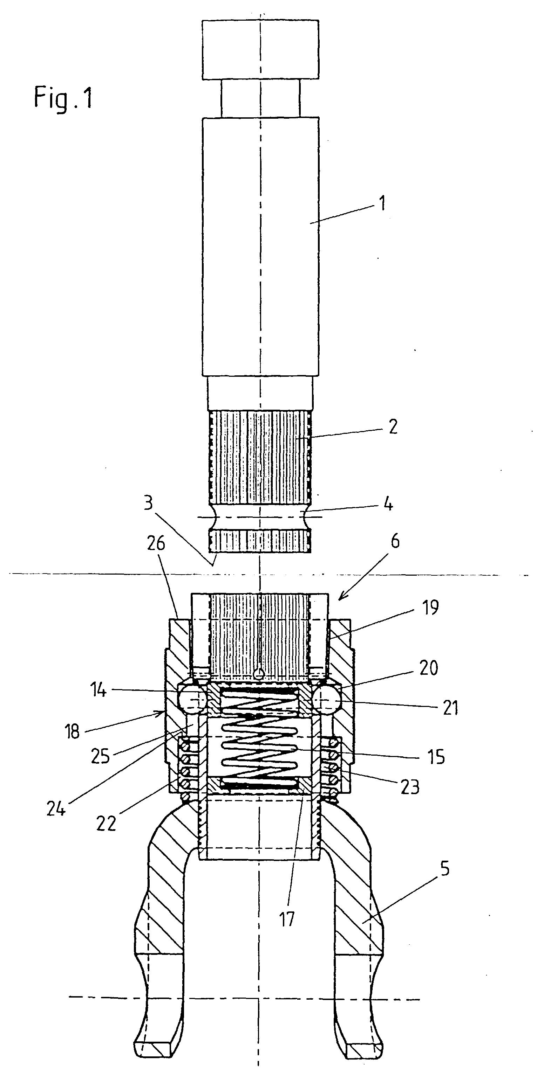

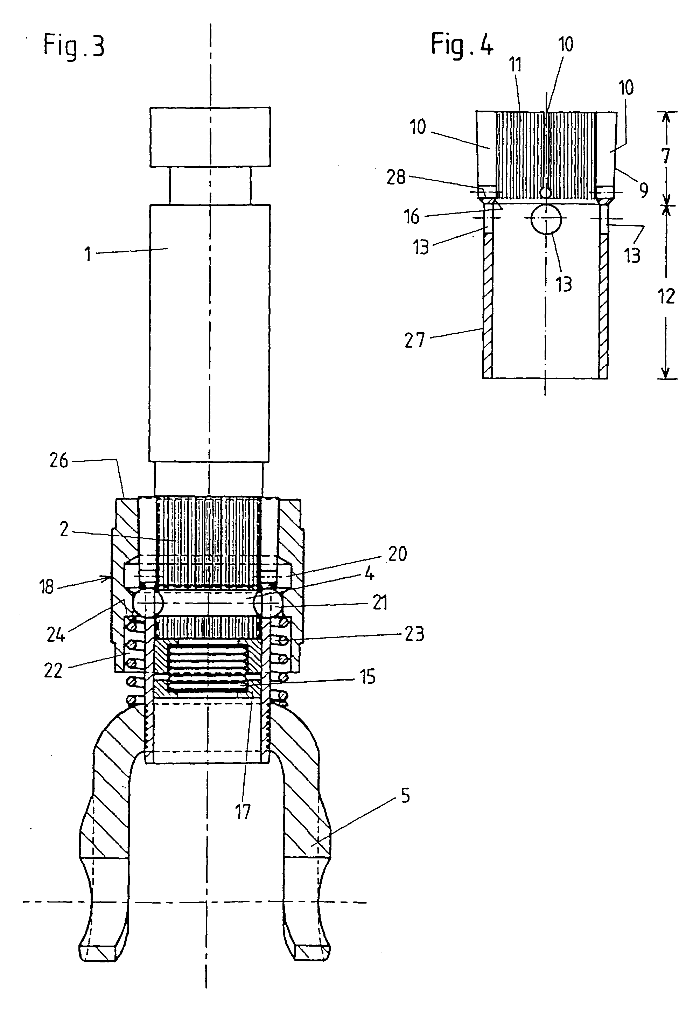

Dieser Wellenzapfen 1 ist nun mit einem Kardangelenk zu verbinden, von dem in Fig. 1 die eine Gelenkgabel 5 gezeigt ist. Diese Gelenkgabel 5 ist in einer geeigneten Weise mit einer Hülse 6 fest verbunden, die in Fig. 4 im Längsschnitt gezeigt ist. Diese Hülse 6 besitzt einen ersten Abschnitt 7 mit einer inneren Kerbverzahnung 8, wobei die äußere Begrenzungsfläche 9 dieses Abschnittes 7 einen gegen die Aufnahmeseite der Hülse 6 divergierenden konischen Anzug besitzt, beispielsweise von annähernd zwei Bogengraden. Mehrere achsparallele Längsschlitze 10 unterteilen diesen Abschnitt 7 der Hülse 6 in Umfangsrichtung derselben in einzelne federnde Laschen 11. Die achsiale Länge dieser Kerbverzahnung 8 ist mindestens so groß wie jene des Wellenzapfens 1.

An diesen ersten Abschnitt 7 der Hülse 6 schließt ein zweiter Abschnitt 12 an von zylindrischer Gestalt, der in einer Querschnittsebene, die nahe dem ersten Abschnitt 7 liegt, in Umfangsrichtung mehrere Bohrungen 13 aufweist. Dieser Abschnitt 12 ist mit der Gelenkgabel 5 fest verbunden. Dieser Abschnitt 12 ist etwas länger als der erstbesprochene Abschnitt 7. Innerhalb dieses Abschnittes 12 liegt ein topfartiger Verschlußteil 14, der durch die Kraft einer Feder 15 an einer inneren Schulter 16 im Übergang vom einen Abschnitt 7 zum anderen Abschnitt 12 der Hülse 6 gehalten ist, wobei die achsiale Länge dieses topfartigen Verschlußteiles 14 etwa so groß ist wie der Durchmesser der Bohrungen 13. Die innerhalb der Hülse 6 liegende Feder 15 mit kleiner Federkonstante stützt sich mit ihrem anderen Ende an einem scheibenförmigen Widerlager 17 ab, das beispielsweise mittels eines Preßsitzes an der Hülse 6 festgelegt sein kann. Diese Hülse 6 mit dem scheibenförmigen Widerlager 17 könnte auch einstückig als Drehteil ausgebildet sein. Der erste, die innere Kerbverzahnung 8 tragende Abschnitt 7 ist kürzer als der zweite Abschnitt 12 der Hülse 6, und die äußere Mantelfläche 27 dieses zweiten Abschnittes 12 geht über eine Stufe 28 bzw. einen Absatz zum ersten Abschnitt 7 über.

Diese Hülse 6 ist nun von einer Buchse 18 aufgenommen, die relativ zu ihr achsial verschiebbar gelagert ist. Diese Buchse 18 besitzt eine zum konischen Anzug der Hülse 6 korrespondierende Bohrung 19, an welche in Achsrichtung der Buchse 18 eine umlaufende Nut 20 anschließt, in welcher eine der Anzahl der Bohrung 13 entsprechende Anzahl von Sperrkugeln 21 liegen. Der Durchmesser der Sperrkugeln 21 entspricht dem Durchmesser der Bohrungen 13. Des weiteren nimmt diese Buchse 18 mit ihrer unteren stirnseitigen Bohrung 22 eine Schraubenfeder 23 auf, die sich mit ihrem einen Ende an der Gelenkgabel 5 absfützt und mit ihrem anderen Ende an einer inneren Schulter 24, mit der die Bohrung 22 in eine nachfolgende Bohrung 25 mit verjüngtem Querschnitt übergeht. Diese Schraubenfeder 23 ist von der Hülse 6 durchsetzt, Ihre Federkonstante ist um ein Vielfaches größer als jene der in der Hülse 6 liegenden Feder 15, die mit dem Verschlußteil 14 zusammenwirkt.

Der Durchmesser der in einer Querschnittsebene des zweiten Abschnittes 12 der Hülse 6 liegenden Bohrungen 13 ist so groß wie der Durchmesser der Sperrkugeln 21, und die Tiefe der vorzugsweise nahe der Stirnseite 3 des Wellenzapfens 1 vorgesehen Nut 4 ist kleiner als der halbe Durchmesser der Sperrkugeln 21. Die Breite des Ringraumes, der einerseits vom Grund der in der Buchse 18 eingedrehten Nut 20 und andererseits von dem in seiner Verschlußstellung befindlichen Verschlußteil 14 begrenzt ist, entspricht zumindest dem Durchmesser der Sperrkugeln 21. Durch die topfartige Ausbildung des Verschlußteiles 14 ist das eine Ende der ihn tragenden Feder 15 geführt und gehalten. Die Feder 23 mit der großen Federkonstante liegt in einem ringförmigen Spaltraum, der vom zweiten Abschnitt 12 der Hülse 6 mit der Wandung der ihn aufnehmenden Bohrung 22 der Buchse 18 begrenzt ist. Die achsiale Länge dieses Ringraumes entspricht etwa der Länge der zusammengedrückten, betriebsmäßig vorgespannten Feder 23. Die Länge der Hülse 6 ist größer als die Länge der Buchse 18. Die an der Innenseite der Buchse 18 vorgesehene, der Aufnahme der Sperrkugeln 21 dienende Nut ist etwa im mittleren Längsbereich der Buchse 18 angeordnet.

Fig. 1 zeigt nun die zu verbindenden Teile in fluchtender Anordnung zueinander, jedoch noch voneinander getrennt. Durch die innere Feder 15 wird der topfartige Verschlußteil 14 gegen die Schulter 16 gedrückt, wodurch die Sperrkugeln 21 vorerst daran gehindert sind, durch die Bohrungen 13 in die Hülse 6 einzutreten. Dabei ist die äußere Feder 23 vorgespannt, der obere Teil der Hülse 6 bzw. deren Abschnitt 7 ragt zum Teil über die Stirnseite 26 der Buchse 18 hinaus.

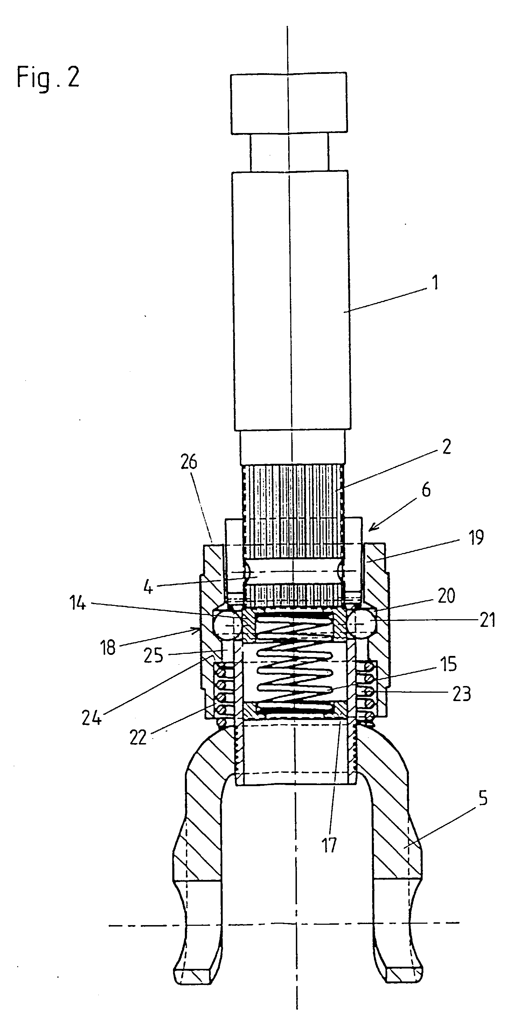

Werden die beiden Teile gegeneinander geführt (Fig. 2), so fährt der Wellenzapfen 1 bzw. seine Kerbverzahnung 2 in den Abschnitt 7 der Hülse 6 ein, bis seine Stirnseite 3 an den Verschlußteil 14 anstößt. Beim weiteren Zusammenschieben der Teile wird nun der Verschlußteil 14 durch die Stirnseite 3 des Wellenzapfens 1 gegen die Kraft der Feder 15, die nur eine sehr geringe Kraft auszuüben vermag, zurückgeschoben, wodurch nun die Bohrungen 13 vom Verschlußteil 14 freigegeben werden, so daß die Sperrkugeln 21 in diese Bohrungen 13 eintreten können, sobald die Nut 4 des Wellenzapfens 1 jene Querschnittsebene der Hülse 6 erreicht hat, in der diese Bohrungen 13 liegen (Fig. 3). Dabei tritt die vorerst vorgespannte Feder 23 in Aktion, die nunmehr mit großer Kraft die Buchse 18 nach oben schiebt, wodurch einerseits die in die Bohrung 13 eingefallenen Sperrkugeln 21 in ihrer Sperrlage gehalten sind und andererseits die durch die Längsschlitze 10 gebildeten Laschen 11 des Abschnittes 7 der Hülse 6 radial zusammengedrückt werden, so daß die beiden Kerbverzahnungen 2 und 8 spielfrei miteinander verbunden sind. Damit ist der Forderung nach einer spielfreien Verbindung in Umdrehungsrichtung der Welle bzw. Wellenteile, wie sie bei Lenkungen für Kraftfahrzeuge notwendig sind, ausreichend Rechnung getragen.

Diese vorstehend im einzelnen erläuterte Verbindung ist auch wieder lösbar. Zu diesem Zweck wird (Fig. 3) die Buchse 18 vorerst gegen die Kraft der Feder 23 nach unten gedrückt, bis die Sperrkugeln 21 deckungsgleich mit der Nut 20 liegen, worauf diese Kugeln radial nach außen in diese Nut rollen, worauf der Wellenzapfen 1 aus der Hülse 6 ausziehbar ist.

### Legende zu den Hinweisziffern:

- 1: Wellenzapfen
- 2: Kerbverzahnung
- 3: Stirnseite
- 4: Nut
- 5: Gelenkgabel
- 6: Hülse
- 7: erster Abschnitt
- 8: Kerbverzahnung
- 9: äußere Begrenzungsfläche
- 10: Längsschlitz
- 11: Lasche
- 12: zweiter Abschnitt

- 13: Bohrung
- 14: Verschlußteil
- 15: Feder
- 16: Schulter
- 17: Widerlager
- 18: Buchse
- 19: Bohrung
- 20: Nut
- 21: Sperrkugel
- 22: Bohrung
- 23: Schraubenfeder
- 24: Schulter
- 25: Bohrung
- 26: Stirnseite
- 27: äußere
Mantelfläche
- 28: Stufe

## Patentansprüche

1. Vorrichtung zum Verbinden eines kerbverzahnten, der Übertragung von Drehmomenten dienenden Wellenzapfens (1) mit einem eine innenkerbverzahnte Hülse (6) tragenden Bauteil (5), wobei die Hülse (6) einen ersten, der Aufnahme des Wellenzapfens (1) dienenden, die Kerbverzahnung (8) tragenden Abschnitt (7) aufweist und in einein daran anschließenden zweiten Abschnitt (12) in einer Querschnittsebene derselben mehrere Bohrungen (13) vorgesehen sind und in dieser Querschnittsebene innerhalb der Hülse (6) ein diese Bohrungen (13) verschließender, gegen die Kraft einer Feder (15) und gegen den mit der Hülse (6) verbundenen Bauteil (5) verschiebbarer Verschlußteil (14) vorgesehen ist, und diese Hülse (6) von einer relativ zu ihr achsial verschiebbaren Buchse (18) aufgenommen ist mit einer Bohrung (19), an welche eine innere, der Aufnahme von Sperrelementen, insbesondere Sperrkugeln (21) dienende Nut (20) anschließt, und der zweite Abschnitt (12) der Hülse (6) eine Feder (23) durchsetzt, die sich einerseits an der Buchse (18) und andererseits an dem an der Hülse (6) festgelegten Bauteil (5) abstützt und der Wellenzapfen (1) vorzugsweise nahe seiner Stimseite (3) eine umlaufende Nut besitzt, dadurch gekennzeichnet, daß der erste Hülsenabschnitt (7) mit mehreren achsparallelen Längsschlitzen (10) versehen ist, und die äußere Begrenzungsfläche (9) dieses Abschnittes (7) einen gegen die Aufnahmeseite der Hülse (6) divergierenden konischen Anzug besitzt und daß die Bohrung (19) zur Aufnahme der Hülse (6) zum konischen Anzug der Hülse (6) korrespondiert.

2. Vorrichtung nach Anspruch 1, dadurch gekennzeichnet, daß der erste, die innere Kerbverzahnung (8) tragende Abschnitt (7) kürzer ist als der zweite Abschnitt (12) der Hülse (6) und die äußere Mantelfläche (27) dieses zweiten Abschnittes (12) über eine Stufe (28) bzw. einen Absatz zum ersten Abschnitt (7) übergeht.

3. Vorrichtung nach Anspruch 1, dadurch gekennzeichnet, daß der Durchmesser der in einer Querschnittsebene des zweiten Abschnittes (12) liegenden Bohrungen (13) so groß ist wie der Durchmesser der Sperrkugeln (21) und die Tiefe der vorzugsweise nahe der Stirnseite (3) des Wellenzapfens (1) vorgesehenen Nut (4) kleiner ist als der halbe Durchmesser der Sperrkugeln (21).

4. Vorrichtung nach Anspruch 1, dadurch gekennzeichnet, daß die Breite des Ringraumes, der einerseits vom Grund der in der Buchse (18) eingedrehten Nut (20) und andererseits von dem in seiner Verschlußstellung befindlichen Verschlußteil (14) begrenzt ist, zumindest dem Durchmesser der Sperrkugeln (21) entspricht.

5. Vorrichtung nach Anspruch 1, dadurch gekennzeichnet, daß die den Verschlußteil (14) in der Verschlußstellung haltende Feder ((15) als Schraubenfeder ausgebildet ist, die mit ihrem einen Ende sich an einem in der Hülse (6) vorgesehenen Widerlager (17) abstützt und vorzugsweise dieses Widerlager als mit einem Preßsitz festgelegte Scheibe ausgebildet ist.

6. Vorrichtung nach Anspruch 1, dadurch gekennzeichnet, daß die Innenwandungen der beiden Abschnitte (7, 12) der Hülse (6) unterschiedliche Durchmesser aufweisen und die dadurch gebildete Schulter (16) als Anschlag dient für den durch die Kraft der Feder (15) in Schließstellung gehaltenen Schlußteil (14).

7. Vorrichtung nach Anspruch 1 oder Anspruch 6, dadurch gekennzeichnet, daß der Verschlußteil (14) topfartig ausgebildet ist.

8. Vorrichtung nach Anspruch 1, dadurch gekennzeichnet, daß der zweite Abschnitt (12) der Hülse (6) mit der Wandung der ihn aufnehmenden Bohrung (22) der Buchse (18) einen ringförmigen Spaltraum begrenzt, und die einerseits am Bauteil (5) abgestützte Feder (23) in diesen Ringraurn ragt.

9. Vorrichtung nach Anspruch 8, dadurch gekennzeichnet, daß die achsiale Länge des Ringraumes etwa der Länge der zusammengedrückten, am Bauteil (5) anliegenden, betriebsmäßig vorgespannten Feder (23) entspricht.

10. Vorrichtung nach Anspruch 1, dadurch gekennzeichnet, daß die Länge der Bülse (6) größer ist als die Länge der Buchse (18).

11. Vorrichtung nach Anspruch 1, dadurch gekennzeichnet, daß die an der Innenseite der Buchse (18) vorgesehene, der Aufnahme der Sperrkugeln (21) dienende Nut (20) etwa im mittleren Längsbereich der Buchse (18) vorgesehen ist.

12. Vorrichtung nach Anspruch 1, dadurch gekennzeichnet, daß der konische Anzug der Bohrung (19) der Buchse (18) bzw. der äußeren Begrenzungsfläche (9) der Hülse (6) annähernd 2 Bogengrade beträgt.

13. Vorrichtung nach Anspruch 1, dadurch gekennzeichnet, daß die Federkonstante der äußeren, am Bauteil (5) abgestützten Feder (23) um ein Vielfaches größer ist als die Federkonstante der inneren, mit dem Verschließteil (14) zusammenwirkenden Feder (15).

14. Vorrichtung nach einem der Ansprüche 1 bis 12, dadurch gekennzeichnet, daß der kerbverzahnte Wellenzapfen (1) Teil einer Lenksäule einer Kraftfahrzeuglenkung ist und die Hülse (6) mit ihrem einen Ende an der einen Gabel eines Kardangelenkes festgelegt ist.

## Claims

1. A device for connecting a serrated shaft journal (1), used for transmitting torque, to a component (5) carrying an internally serrated sleeve (6), wherein the sleeve (6) comprises a first portion (7) used for receiving the shaft journal (1) and provided with the serration (8), and a plurality of bores (13) are provided in a second portion (12) adjoining the first portion (7) in a cross-sectional plane thereof, and a closure part (14) closing the said bores (13) and displaceable against the force of a spring (15) and against the component (5) connected to the sleeve (6) is provided inside the sleeve (6) in the said cross-sectional plane, and the said sleeve (6) is received by a bush (18) axially displaceable relative thereto and with a bore (19) adjoined by an inner groove (20) used for receiving locking members, in particular locking spheres, and the second portion (12) of the sleeve (6) passes through a spring (23) which is supported at one end on the bush (18) and at the other end on the component (5) secured to the sleeve (6), and the shaft journal (1) is provided with a continuous groove preferably close to its front end (3), **characterized in that** the first sleeve portion (7) is provided with a plurality of axially parallel longitudinal slots (10) and the outer boundary face (9) of the said portion (7) has a conical taper diverging towards the receiving side of the sleeve (6), and the bore (19) corresponds to the conical taper of the sleeve (6) in order to receive the sleeve (6).

2. A device according to Claim 1, **characterized in that** the first portion (7) provided with the internal serration (8) is shorter than the second portion (12) of the sleeve (6), and the external surface (27) of the said second portion (12) passes into the first portion (7) by way of a step (28) or an offset.

3. A device according to Claim 1, **characterized in that** the diameter of the bores (13) situated in a cross-sectional plane of the second portion (12) is as large as the diameter of the locking spheres (21), and the depth of the groove (4) preferably provided close to the front end (3) of the shaft journal (1) is smaller than half the diameter of the locking spheres (21).

4. A device according to Claim 1, **characterized in that** the width of the annular space, which is bounded on one side by the base of the groove (20) cut into the bush (18) and on the other side by the closure part (14) situated in its closure position, con-esponds at least to the diameter of the locking spheres (21).

5. A device according to Claim 1, **characterized in that** the spring (15) holding the closure part (14) in the closure position is constructed in the form of a helical spring which is supported at one end thereof on an abutment (17) provided in the sleeve (6), and this abutment is preferably constructed in the form of a disc fixed by a press fitting.

6. A device according to Claim 1, **characterized in that** the inner walls of the two portions (7, 12) of the sleeve (6) have different diameters, and the shoulder (16) formed thereby acts as a stop for the closure part (14) held in the closure position by the force of the spring (15).

7. A device according to Claim 1 or Claim 6, **characterized in that** the closure part (14) is constructed in the manner of a cup.

8. A device according to Claim 1, **characterized in that** the second portion (12) of the sleeve (6) together with the wall of the bore (22) of the bush (18) receiving it bounds an annular gap, and the spring (23) supported on the component (5) at one end projects into the said annular space.

9. A device according to Claim 8, **characterized in that** the axial length of the annular space corresponds approximately to the length of the compressed spring (23) resting against the component (5) and pre-stressed in operation.

10. A device according to Claim 1, **characterized in that** the length of the sleeve (6) is greater than the length of the bush (18).

11. A device according to Claim 1, **characterized in that** the groove (20) provided on the inside of the bush (18) and used for receiving the locking spheres (21) is provided approximately in the median longitudinal region of the bush (18).

12. A device according to Claim 1, **characterized in that** the conical taper of the bore (19) in the bush (18) and of the outer surface face (9) of the sleeve (6) amounts to approximately 2 degrees.

13. A device according to Claim 1, **characterized in that** the spring constant of the outer spring (23) supported on the component (5) is greater by a multiple than the spring constant of the inner spring (15) cooperating with the closure part (14).

14. A device according to one of Claims 1 to 12, **characterized in that** the serrated shaft journal (1) is part of a steering column of a motor vehicle, and the sleeve (6) is secured at one end thereof to one fork of a cardan joint.

## Revendications

1. Dispositif de liaison d'un tourillon cannelé transmetteur de couples, à un composant (5) comportant une douille (6) équipée d'une denture cannelée interne, dans lequel
- la douille (6) a une première partie (7) servant à recevoir le tourillon (1) et portant la cannelure interne (8), suivie d'une seconde partie (12) présentant, au niveau d'un plan transversal, plusieurs perçages (13),
- l'un de ces perçages (13) est obturé par un obturateur (14) situé dans le même plan et pouvant se déplacer contre l'action d'un ressort (15) par rapport au composant (5) solidaire de la douille (6),
- cette douille (6) est logée dans un manchon (18) qui peut coulisser axialement par rapport à la douille (6) et dont l'alésage interne (19) porte une rainure (20) servant de logement à des organes d'arrêt, en particulier des billes (21),
- la seconde partie (12) la douille (6) traverse un ressort (23) en appui d'un côté sur le manchon (18) et de l'autre sur le composant (5) fixé sur la douille (6),
- le tourillon (1) présente, de préférence près de son extrémité frontale (3), une rainure périphérique,
caractérisé en ce que
- la première partie (7) du manchon porte des cannelures internes longitudinales (10) parallèles à l'axe tandis que sa surface externe (9) présente une forme conique s'évasant en direction de la face d'entrée de la douille (6), et
- l'alésage (19) recevant la douille (6) présente une forme correspondant à la partie conique de cette douille (6).

2. Dispositif selon la revendication 1,
caractérisé en ce que
la première partie (7) portant la denture cannelée (8) est plus courte que la seconde partie (12) de la douille (6), la surface externe (27) de cette deuxième partie (12) étant raccordée à la première par un épaulement (28) c'est-à-dire un gradin.

3. Dispositif selon la revendication 1,
caractérisé en ce que
le diamètre des perçages (13) situés dans un plan transversal de la deuxième partie (12) est égal à celui des billes d'arrêt (21), tandis que la profondeur de la rainure (4) creusée dans le tourillon (1) près de sa face frontale (3) est inférieure au rayon des billes (21).

4. Dispositif selon la revendication 1,
caractérisé en ce que
la largeur de la chambre annulaire délimitée d'un côté par le fond de la rainure (20) réalisée par tournage dans la douille (20), et de l'autre côté par l'obturateur (14) dans sa position de fermeture, est au moins égale au diamètre des billes d'arrêt (21).

5. Dispositif selon la revendication 1,
caractérisé en ce que
le ressort (15) maintenant l'obturateur (14) en position de fermeture est un ressort hélicoïdal s'appuyant par une extrémité sur une butée (17) prévue à l'intérieur de la douille (6) et constituée de préférence par un disque fixé comportant un siège d'appui.

6. Dispositif selon la revendication 1,
caractérisé en ce que
les parois internes des deux parties (7, 12) de la douille (6) ont des diamètres différents, et l'épaulement (16) qu'elles forment ainsi sert de butée d'appui à l'obturateur (14) lorsque celui-ci occupe sa position de fermeture sous la poussée du ressort (15).

7. Dispositif selon les revendications 1 ou 6,
caractérisé en ce que
l'obturateur (14) a la forme d'un pot.

8. Dispositif selon la revendication 1,
caractérisé en ce que
la deuxième partie (12) de la douille (6) délimite avec la paroi de l'alésage (22) du manchon (18) qui lui sert de logement, une chambre annulaire dans laquelle pénètre le ressort (23) en appui d'un côté sur le composant (5).

9. Dispositif selon la revendication 8,
caractérisé en ce que
la longueur axiale de la chambre annulaire est sensiblement égale à celle du ressort (23) en appui sur le composant (5) et précontraint en fonction des conditions de service.

10. Dispositif selon la revendication 1,
caractérisé en ce que
la longueur de la douille (6) est supérieure à celle du manchon (18).

11. Dispositif selon la revendication 1,
caractérisé en ce que
la rainure (20) prévue sur la face interne du manchon (18) pour recevoir les billes d'arrêt (21) est située sensiblement au niveau du milieu longitudinal du manchon (18).

12. Dispositif selon la revendication 1,
caractérisé en ce que la pente conique (19) du manchon (18) et celle de la surface externe (9) de la douille (6), sont d'environ deux degrés.

13. Dispositif selon la revendication 1,
caractérisé en ce que
la constante élastique du ressort externe (23) en appui sur le composant (5) est plusieurs fois supérieure à celle du ressort interne (15) coopérant avec l'obturateur (14).

14. Dispositif selon l'une des revendications 1 à 12,
caractérisé en ce que
le tourillon (1) à denture cannelée est une partie de la colonne de direction d'un véhicule automobile, la douille (6) étant fixée par une extrémité à une fourche d'un joint à cardan.
